# EUROPEAN PATENT APPLICATION

(11) **EP 4 553 692 A1**
(43) Date of publication of application: **14.05.2025**
(21) Application number: 24210756.3
(22) Date of filing: 05.11.2024
(51) Int. Cl.: G06F 30/15, G06F 30/23

(54) **FATIGUE HOT SPOT SCREENING**

(30) Priority: 07.11.2023 US 202318503238
(71) Applicant: The Boeing Company, Arlington, VA 22202 (US)
(72) Inventor: HU, Zhenning, Arlington, 22202 (US); RAMIREZ, Eduardo Dejesus, Arlington, 22202 (US); KERR, Robert Travis, Arlington, 22202 (US); LIN, Zhong, Arlington, 22202 (US); WANTHAL, Steven Paul, Arlington, 22202 (US)
(74) Representative: Sandri, Sandro

(57) **Abstract**

A method for fatigue hot spot screening includes identifying multiple static stress locations neighboring one or more fastener locations and multiple stress concentrations in a finite-element-model of a component in response to analysis results and validated assembly-level analysis results with a computer, generating a fatigue spectrum at each static stress location, generating multiple fatigue analysis control files in response to the fatigue spectrum, reducing the validated assembly-level analysis results, generating a first output file that contains multiple non-fastener stress concentration hot spots in the finite-element-model by a first fatigue analysis at multiple non-fastener stress concentration regions in response to the fatigue analysis control files, calculating one or more local peak stresses for the one or more fastener locations, and generating a second output file that contains multiple fastener hot spots in the finite-element-model by a second fatigue analysis at the fastener locations in response to the fatigue analysis control files.

## Description

### TECHNICAL FIELD

The disclosure relates generally to component testing, and in particular, to fatigue hot spot screening.

### BACKGROUND

Screening fatigue hot spots is challenging in several perspectives. Generating fatigue spectra usually involves both stress analysts and fatigue analysts working together, and so the generation consumes significant time. Due to a large number of finite elements and nodes in simulation models, possibly greater than one million, checking fatigue life at every location on an aircraft component is problematic. Furthermore, calculating fatigue life at a location involves multiple manual steps, such as extracting local stresses or free-body loads, and running fatigue software manually, therefore consuming more time.

Accordingly, those skilled in the art continue with research and development efforts in the field of fatigue hot spot screening.

### SUMMARY

A method for fatigue hot spot screening is provided herein. The method includes identifying a plurality of static stress locations neighboring one or more fastener locations and a plurality of stress concentrations in a finite-element-model of a component in response to a plurality of analysis results and a plurality of validated assembly-level analysis results with a computer; generating a fatigue spectrum at each of the plurality of static stress locations; generating a plurality of fatigue analysis control files in response to the fatigue spectrum; reducing the plurality of validated assembly-level analysis results of the finite-element-model; generating a first output file that contains a plurality of non-fastener stress concentration hot spots in the finite-element-model by a first fatigue analysis at a plurality of non-fastener stress concentration regions in response to the plurality of fatigue analysis control files; calculating one or more local peak stresses for the one or more fastener locations; and generating a second output file that contains a plurality of fastener hot spots in the finite-element-model by a second fatigue analysis at the one or more fastener locations in response to the plurality of fatigue analysis control files.

In one or more embodiments, the method includes extracting one or more node stresses at one or more nodes of a plurality of solid elements in the finite-element-model. The generating of the fatigue spectrum is based on the one or more node stresses.

In one or more embodiments, the method includes extracting one or more element stresses at one or more shell elements in the finite-element-model. The generating of the fatigue spectrum is based on the one or more element stresses.

In one or more embodiments of the method, the generating of the fatigue spectrum at the plurality of static stress locations includes: generating a plurality of summed stress components by summing a plurality of contributions from a plurality of commanded actuator inputs for each of a plurality of stress components extracted from the finite-element-model; calculating a plurality of principle stresses from the plurality of summed stress components; determining a maximum magnitude principle stress among the plurality of principle stresses; and generating a normalized fatigue spectrum by normalizing a time history to the maximum magnitude principle stress for a specified load case.

In one or more embodiments of the method, the reducing of the plurality of validated assembly-level analysis results includes splitting the plurality of validated assembly-level analysis results into a plurality of component-level results.

In one or more embodiments of the method, the calculating of the one or more local peak stresses for the one or more fasteners includes: generating one or more fastener profiles of the one or more fasteners; extracting one or more fastener bearing stresses and one or more bypass stresses based on the plurality of validated assembly-level analysis results of a plurality of test load cases; calculating a plurality of stress correction factors for the one or more fasteners in response to the one or more fastener profiles; calculating a plurality of directional peak stresses in a plurality of directions; and pairing the one or more fasteners with corresponding fatigue spectra for fatigue analysis to determine one or more fatigue hot spots.

In one or more embodiments of the method, the identification of the plurality of static stress locations is in response to an analysis results of a plurality of test load cases for the finite-element-model.

In one or more embodiments of the method, the calculating of the one or more local peak stresses for the one or more fasteners is in response to the plurality of validated assembly-level analysis results of a plurality of test load cases applied to the finite-element-model.

In one or more embodiments of the method, the generating of the fatigue spectrum is in response to a time history of a plurality of commanded actuator inputs applied to the component.

A system for fatigue hot spot screening is provided herein. The system includes a memory operational to buffer a plurality of analysis results and a plurality of validated assembly-level analysis results; and a computer operational to: identify a plurality of static stress locations neighboring one or more fastener locations and a plurality of stress concentrations in a finite-element-model of a component in response to the plurality of analysis results and the plurality of validated assembly-level analysis results; generate a fatigue spectrum at each of the plurality of static stress locations; generate a plurality of fatigue analysis control files in response to the fatigue spectrum; reduce the plurality of validated assembly-level analysis results of the finite-element-model; generate a first output file that contains a plurality of non-fastener stress concentration hot spots in the finite-element-model by a first fatigue analysis at a plurality of non-fastener stress concentration regions in response to the plurality of fatigue analysis control files; calculate one or more local peak stresses for the one or more fastener locations; and generate a second output file that contains a plurality of fastener hot spots in the finite-element-model by a second fatigue analysis at the one or more fastener locations in response to the plurality of fatigue analysis control files.

In one or more embodiments of the system, the computer is operational to extract one or more node stresses at one or more nodes of a plurality of solid elements in the finite-element-model; and the generation of the fatigue spectrum is based on the one or more node stresses.

In one or more embodiments of the system, the computer is operational to extract one or more element stresses at one or more shell elements in the finite-element-model; and the generation of the fatigue spectrum is based on the one or more element stresses.

In one or more embodiments of the system, the generation of the fatigue spectrum at the plurality of static stress locations includes: generate a plurality of summed stress components by summing a plurality of contributions from a plurality of commanded actuator inputs for each of a plurality of stress components extracted from the finite-element-model; calculate a plurality of principle stresses from the plurality of summed stress components; determine a maximum magnitude principle stress among the plurality of principle stresses; and generate a normalized fatigue spectrum by normalizing a time history to the maximum magnitude principle stress for a specified load case.

In one or more embodiments of the system, the reduction of the plurality of validated assembly-level analysis results includes: split the plurality of validated assembly-level analysis results into a plurality of component-level results.

In one or more embodiments of the system, the calculation of the one or more local peak stresses for the one or more fasteners includes: generate one or more fastener profiles of the one or more fasteners; extract one or more fastener bearing stresses and one or more bypass stresses based on the plurality of validated assembly-level analysis results of a plurality of test load cases; calculate a plurality of stress correction factors for the one or more fasteners in response to the one or more fastener profiles; calculate a plurality of directional peak stresses in a plurality of directions; and pair the one or more fasteners with corresponding fatigue spectra for fatigue analysis to determine one or more fatigue hot spots.

In one or more embodiments of the system, the identification of the plurality of static stress locations is in response to an analysis results of a plurality of test load cases for the finite-element-model.

In one or more embodiments of the system, the calculation of the one or more local peak stresses for the one or more fasteners is in response to the plurality of validated assembly-level analysis results of a plurality of test load cases applied to the finite-element-model.

In one or more embodiments of the system, the generation of the fatigue spectrum is in response to a time history of a plurality of commanded actuator inputs applied to the component.

A non-transitory computer readable storage medium storing instructions that control data processing is provided herein. The instructions, when executed by a processor cause the processor to perform a plurality of operations including identifying a plurality of static stress locations neighboring one or more fastener locations and a plurality of stress concentrations in a finite-element-model of a component in response to a plurality of analysis results and a plurality of validated assembly-level analysis results; generating a fatigue spectrum at each of the plurality of static stress locations; generating a plurality of fatigue analysis control files in response to the fatigue spectrum; reducing the plurality of validated assembly-level analysis results of the finite-element-model; generating a first output file that contains a plurality of non-fastener stress concentration hot spots in the finite-element-model by a first fatigue analysis at a plurality of non-fastener stress concentration regions in response to the plurality of fatigue analysis control files; calculating one or more local peak stresses for the one or more fastener locations; and generating a second output file that contains a plurality of fastener hot spots in the finite-element-model by a second fatigue analysis at the one or more fastener locations in response to the plurality of fatigue analysis control files.

In one or more embodiments of the non-transitory computer readable storage medium, the plurality of operations further comprise extracting one or more node stresses at one or more nodes of a plurality of solid elements in the finite-element-model; and the generating of the fatigue spectrum is based on the one or more node stresses.

The above features and advantages, and other features and advantages of the present disclosure are readily apparent from the following detailed description of the best modes for carrying out the disclosure when taken in connection with the accompanying drawings.

### BRIEF DESCRIPTION OF THE DRAWINGS

FIG. 1 is a flow diagram of a method for virtual fatigue simulation in accordance with one or more exemplary embodiments.
FIG. 2 is a detailed flow diagram of a location identification in accordance with one or more exemplary embodiments.
FIG. 3 is a detailed flow diagram of a fatigue spectra generation in accordance with one or more exemplary embodiments.
FIG. 4 is a detailed flow diagram of a fatigue analysis control files generation in accordance with one or more exemplary embodiments.
FIG. 5 is a detailed flow diagram of a reduce analysis result database generation in accordance with one or more exemplary embodiments.
FIG. 6 is a detailed flow diagram of a fastener stress in accordance with one or more exemplary embodiments.
FIG. 7 is a detailed flow diagram of a fatigue analysis at the fasteners in accordance with one or more exemplary embodiments.
FIG. 8 is a schematic block diagram of a computer-based system in accordance with one or more exemplary embodiments.
FIG. 9 is a schematic plan and cross-sectional view diagram of a component with a joint in accordance with one or more exemplary embodiments.
FIG. 10 is a schematic perspective diagram a component with a non-fastener stress concentration region in accordance with one or more exemplary embodiments.

### DETAILED DESCRIPTION

Embodiments of the present disclosure include a method and/or a system directed to an automated analysis technique to screen hotspots of potential cracks in a full-scale fatigue test. Built on a validated/verified high-fidelity simulation model, the technique calculates fatigue spectra at multiple locations, calculates and plots fatigue life of the whole component/ subcomponent, and exports the suspected crack locations. The locations may be subsequently examined in a detailed durability and damage tolerance analysis.

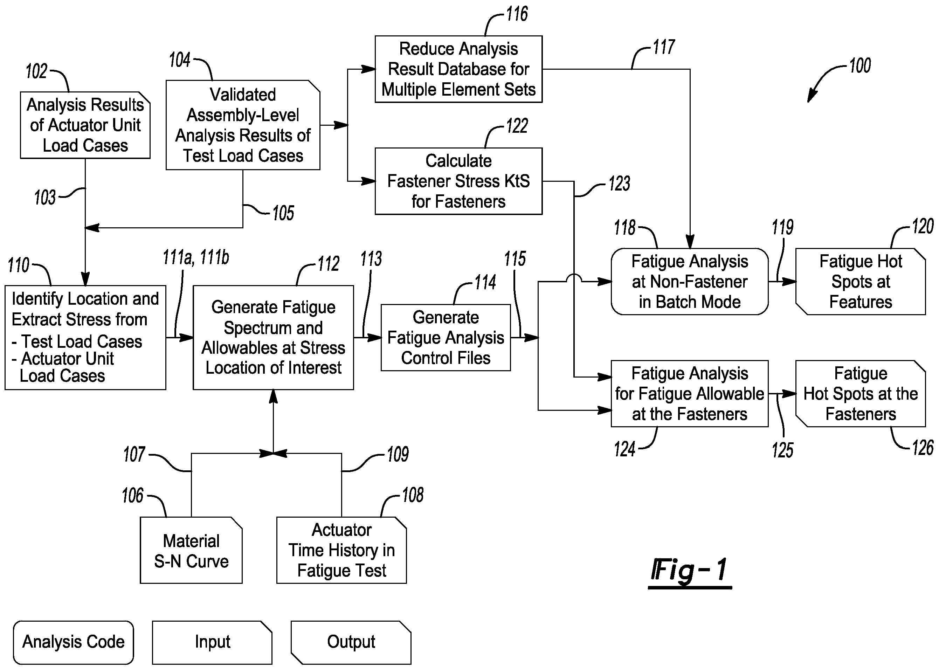

Referring to FIG. 1, a flow diagram of an example method for virtual fatigue simulation is shown in accordance with one or more exemplary embodiments. The method (or process) 100 may be implemented by one or more computers and one or more user interface devices (e.g., a monitor with a keyboard and/or mouse). The method 100 generally includes steps 102 to 126, as illustrated. The sequence of steps is shown as a representative example. Other step orders may be implemented to meet the criteria of a particular application.

The steps 102-108 implement data collection operations. The step 102 provides input data for analysis results 103 of actuator unit load cases of a component. The step 104 provides input data for validated assembly-level analysis results 105 of multiple test load cases for the component. Input data for a material S-N curve 107 of the component is provided in the step 106. The material S-N curve 107 is a plot of a magnitude of an alternating stress versus the number of cycles to component failure. The step 108 provides input data for an actuator time history of commanded actuator inputs 109 in a fatigue test for the component.

In the step 110, a location for a potential hot spot in the component is identified from the validated assembly-level analysis results 105 of the test load cases received in the step 104. The stresses are extracted at the potential hot spots from the analysis results 105 of the test load cases and the analysis result 103 of the actuator unit load cases received in the step 102. The location and extracted stress may be static stress locations 111a neighboring one or more fastener locations and stress concentrations 111b in a finite-element-model of the component in response to the load cases. The locations of the potential hot spots is presented to the step 112. The step 112 generates a fatigue spectrum and allowables 113 at the stress locations of interest. The fatigue spectrum and allowables 113 are based on the material S-N curve 107 received from the step 106 and the actuator time history received in the step 108. The fatigue spectrum and allowables 113 are presented to the step 114. The step 114 generates fatigue analysis control files 115. The fatigue analysis control files 115 are presented to the step 118 and the step 120.

The step 116 generates a reduce analysis result database 117 for multiple element sets. The database 117 is based on the validated assembly-level analysis results 105 received from the step 104. A fatigue analysis at the non-fastener stress concentration regions is performed in batch mode in the step 118. The results may be a fatigue margin calculation using fatigue allowables or a fatigue life calculation using fatigue analysis tool. An example fatigue analysis tool may be Fe-Safe^{®}, developed by and is available from Dassault Systemes, Velizy-Villacoublay, France. Fe-Safe is a registered trademark of Dassault Systemes. The fatigue analysis at the non-fastener stress concentration regions is based on the fatigue analysis control files 115 from step 114 and the reduce analysis result database 117 from the step 116. Locations of the resulting non-fastener stress concentration hot spots 119 are stored in memory and/or output from the system in a file generated in the step 120.

The step 122 calculates KtS, the peak stresses at stress concentration locations for the fasteners. The peak stress KtS at stress concentration locations may define a local peak stress 123. The stress concentration factors are based on the validated assembly-level analysis results 105 received from the step 104. The stress concentration factors/local peak stresses 123 are presented to the step 124. A fatigue analysis for fatigue allowable at the fasteners is performed in batch mode in the step 124. The fatigue analysis for the fasteners is based on the fatigue analysis control files 115 received from the step 114 and the stress concentration factors/local peak stresses 123 for the fasteners determined in the step 122. Locations of the resulting fastener hot spots 125 are stored in memory and/or output from the system in a file generated in the step 126.

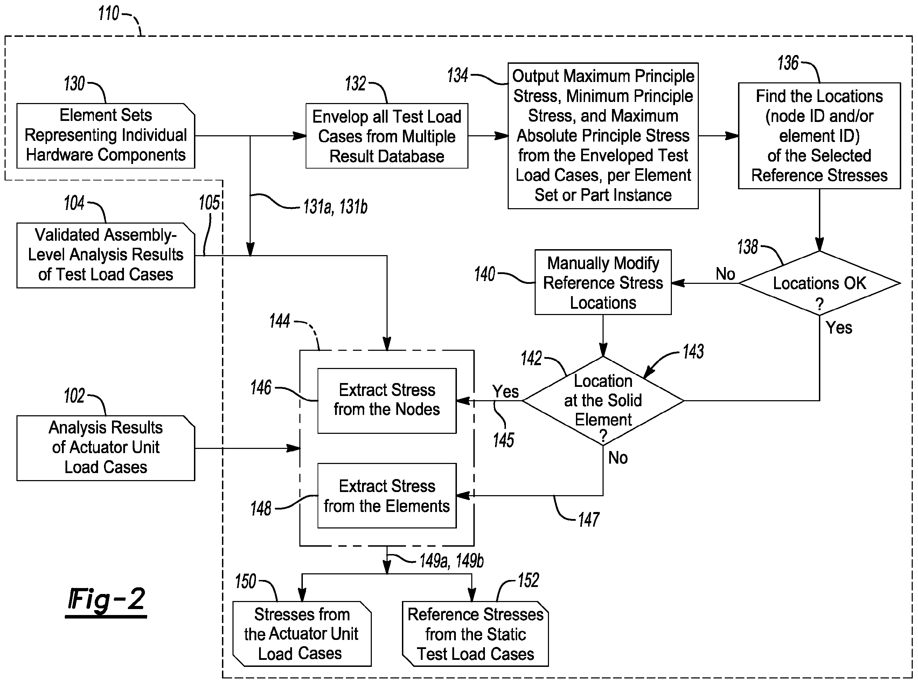

Referring to FIG. 2, a detailed flow diagram of an example implementation of the location identification step 110 is shown in accordance with one or more exemplary embodiments. The step 110 generally includes steps 130 to 152, with data received from the step 102 and the step 104, as illustrated. The sequence of steps is shown as a representative example. Other step orders may be implemented to meet the criteria of a particular application.

The analysis results of the step 102 are provided to the step 144. The validated assembly-level analysis results 105 of the step 104 are provided to the step 132 and the step 144. The step 130 is another input data step. The step 130 provides element sets representing individual hardware components. The element sets are provided to the step 132 and the step 144.

Test load cases from multiple result database are optionally enveloped in the step 132. The enveloped test load case is presented to the step 134.

The step 134 outputs data for a maximum principle stress, a minimum principle stress, and a maximum absolute principle stress from the enveloped test load cases, per element set or part instance. The output data from the step 134 is presented to the step 136.

The step 136 finds the locations (e.g., node identification and/or element identification) of selected reference stresses. A check on the reference stress locations is performed in the step 138. If one or more of the reference stress locations is not correct, the incorrection locations may be manually modify in the step 140. The correct reference stress locations, and the manually modified reference stress locations (if any), are checked again in the step 142.

The step 142 checks if the reference stress locations are located at solid elements 145 of a finite-element-model 143 of the component. The reference stress location are subsequently presented to the step 144. The step 144 generally includes the step 146 and the step 148. For the reference stress locations located at solid elements 145, the stress is extracted from the nodes in the step 146. For the reference stress locations not located at solid elements 147, the stress is extracted from the elements in the step 148. The extractions are based on the analysis results received from the step 102, the validated assembly-level analysis results 105 received from the step 104, and the nodes 131a and shell elements 131b received from the step 130. Stresses 149 extracted in the step 144 loads (e.g., node stresses 149a in the step 146 and/or element stresses 149b in the step 148) from the actuator unit load cases are stored in memory in the step 150. The stresses 149a-149b extracted in the step 144 from the static test load cases are stored in memory in the step 152.

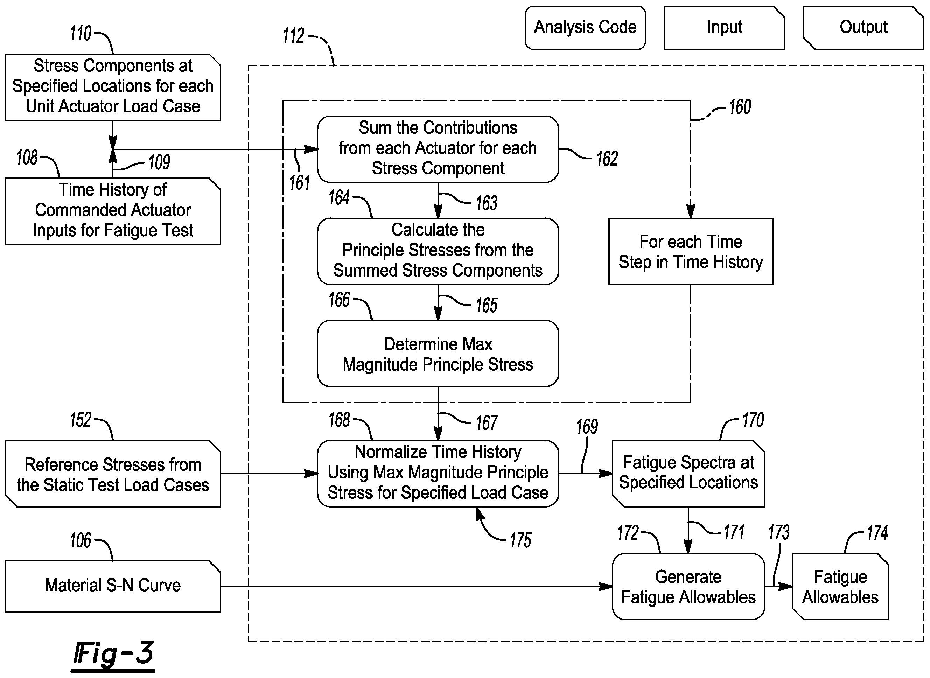

Referring to FIG. 3, a detailed flow diagram of an example implementation of the fatigue spectra generation step 112 is shown in accordance with one or more exemplary embodiments. The step 112 generally includes steps 160 to 174, with data received from the step 106, the step 108, the step 110, and the step 152, as illustrated. The sequence of steps is shown as a representative example. Other step orders may be implemented to meet the criteria of a particular application.

The step 160 defines a loop through the step 162, the step 164 and the step 166 for each time step in the time history 108. The contributions from each commanded actuator inputs 109 from step 108 for each stress component 161 are summed in the step 162 to generate summed stress components 163. The contributions are based on the time history received from the step 108 and the stress components received from the step 110. The step 164 may calculate the principle stresses 165 from the summed stress components 163. A maximum magnitude principle stress 167 is determined in the step 166.

After the last time step 160 in the time history 108 has been considered, the time history is normalized using the maximum magnitude principle stress 167 for a specified load case 175 in the step 168. The normalization step 168 is based on the reference stresses received from the step 152. The normalized fatigue spectrum 169 is stored in memory in the step 170 as fatigue spectra 171 at the specified locations.

The fatigue spectra 171 from the step 170 and the material S-N curve 107 from the step 106 are used in the step 172 to generate fatigue allowable data 173. The fatigue allowable data 173 is stored in the memory in the step 174.

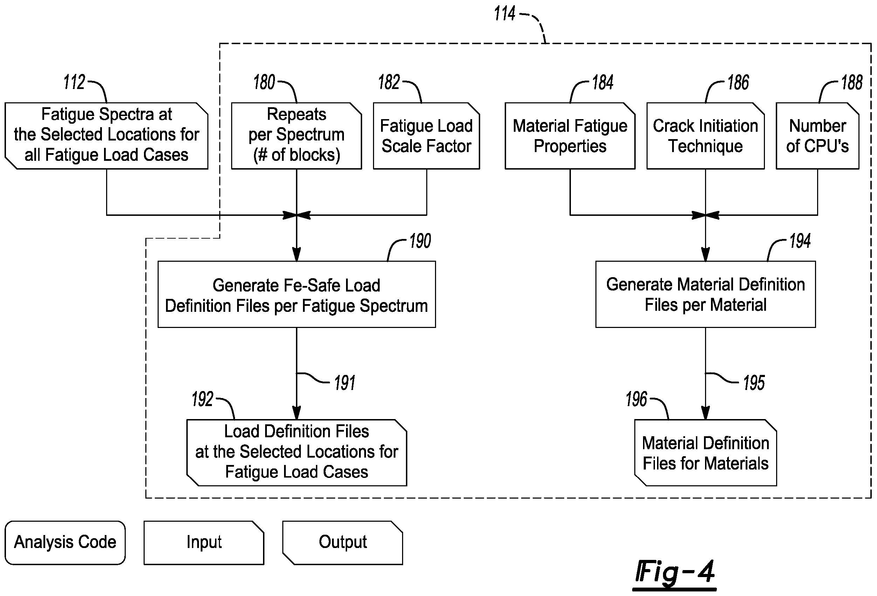

Referring to FIG. 4, a detailed flow diagram of an example implementation of the fatigue analysis control files 115 generation step 114 is shown in accordance with one or more exemplary embodiments. The step 114 generally includes steps 190 to 196, with data received from the step 112 and steps 180 to 188, as illustrated. The sequence of steps is shown as a representative example. Other step orders may be implemented to meet the criteria of a particular application.

The steps 180-188 implement additional data collection operations. The step 180 provides input data for repeats per spectrum (e.g., the number of blocks). The step 182 provides input data for a fatigue load scale factor. Material fatigue properties are provided in the step 184. The step 186 provides input data for a crack initiation technique. In various embodiments, the crack initiation technique is available in Fe-Safe. A number of central processing units (CPU) used to generate the control files are input in the step 188.

The step 190 generates load definition files 191 per fatigue spectrum 171. The load definition files 191 are generated based on the fatigue spectra 171 received from the step 112, the repeats per spectrum received from the step 180, and the fatigue load scale factor received from the step 182. The load definition files 191 at the selected locations for the fatigue load cases is stored in memory in the step 192.

The step 194 generates material definition files 195 per material used for the component. The material definition files 195 are generated based on the material fatigue properties received from the step 184, the crack initiation technique per the step 186, and the number of central processing unit from the step 188. The material definition files 195 for the materials is stored in the memory in the step 196.

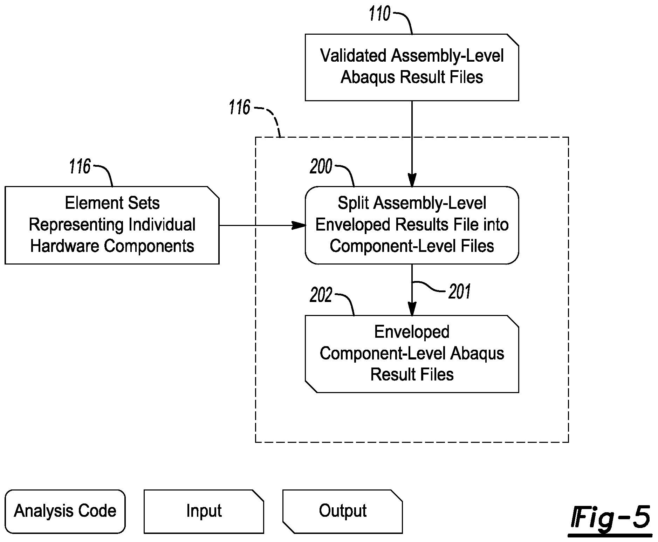

Referring to FIG. 5, a detailed flow diagram of an example implementation of the reduce analysis result database generation in step 116 is shown in accordance with one or more exemplary embodiments. The step 116 generally includes steps 200 to 202, with data received from the step 110, and the step 116, as illustrated. The sequence of steps is shown as a representative example. Other step orders may be implemented to meet the criteria of a particular application.

The step 200 splits the assembly-level enveloped results file (from the step 110) into component-level results 201. The splitting may be based on the element sets received from the step 116. The resulting enveloped component-level results 201 are stored in the step 202.

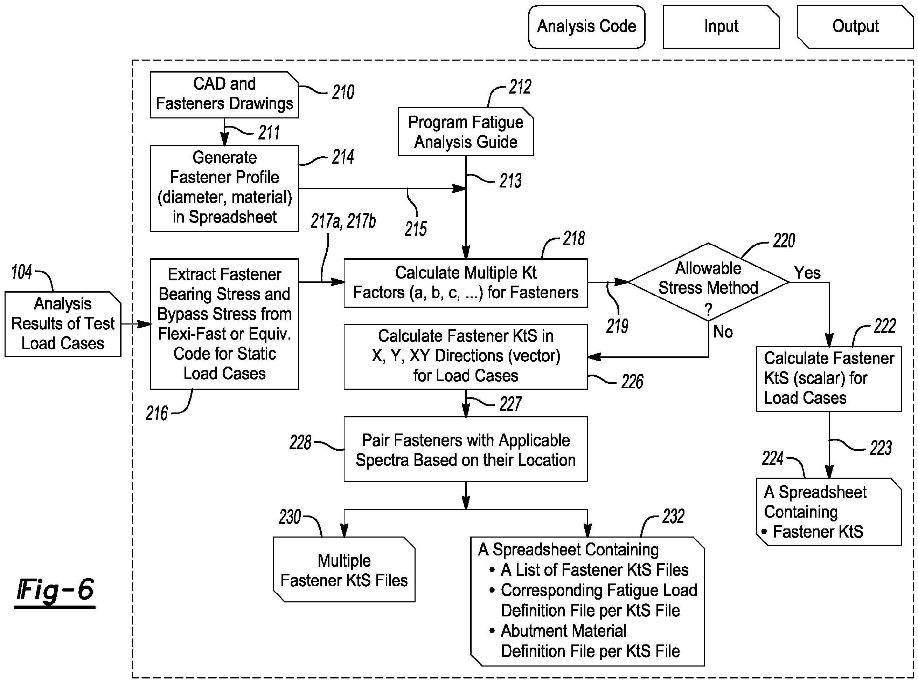

Referring to FIG. 6, a detailed flow diagram of an example implementation of the fastener stress step 122 is shown in accordance with one or more exemplary embodiments. The step 122 generally includes steps 210 to 232, with data received from the step 104, as illustrated. The sequence of steps is shown as a representative example. Other step orders may be implemented to meet the criteria of a particular application.

The steps 210 and 212 implement data collection operations. The step 210 provides computer-aided design (CAD) and fastener drawings 211 to the step 214. The step 212 provides program fatigue analysis guides 213 to the step 218.

The step 214 generates one or more fastener profiles 215 (e.g., diameter, material, etc.) in spreadsheet form. The fastener profiles 215 are based on the CAD drawings and the fastener drawings received from the step 210. The fastener profiles 215 are presented to the step 218.

The step 216 extracts fastener bearing stresses 217a and bypass stresses 217b for the various static load cases. The results are presented to the step 218. An example tool for extracting the fastener bearing stress is a Flexi-Fast tool. Flexi-Fast is available from The Boeing Company, Arlington, Virginia.

The step 218 calculates multiple Kt factors (a, b, c, ...) for the fasteners. The Kt factors may be referred to as stress correction factors 219. The calculations are based on the extracted fastener bearing stresses 217a and bypass stresses 217b received from the step 216 and the fatigue analysis guides 213 received from the step 212. The Kt factors are presented to the step 220.

A check is performed in the step 220 to verify that the Kt factors were calculated per fastener for allowable stress method. If the stress method was allowable, scalar fastener KtS information 223 is calculated for the load cases in the step 222. The scalar fastener KtS information 223 is stored in a spreadsheet in the step 224.

If the stress method was not allowable, vector fastener KtS information in X, Y, XY directions is calculated for the load cases in the step 226. The vector fastener KtS information may be referred to as directional peak stresses 227 due to the multiple directions. The fasteners with applicable spectra based on location are paired in the step 228 for subsequent fatigue analysis to determine fatigue hot spots. In the step 230, multiple fastener KtS files are stored in the memory. In the step 232, a spreadsheet for the fastener data is stored in the memory. The spreadsheet generally contains the fastener KtS files, a corresponding fatigue load definition file per the fastener KtS files, and an abutment material definition file per the fastener KtS file.

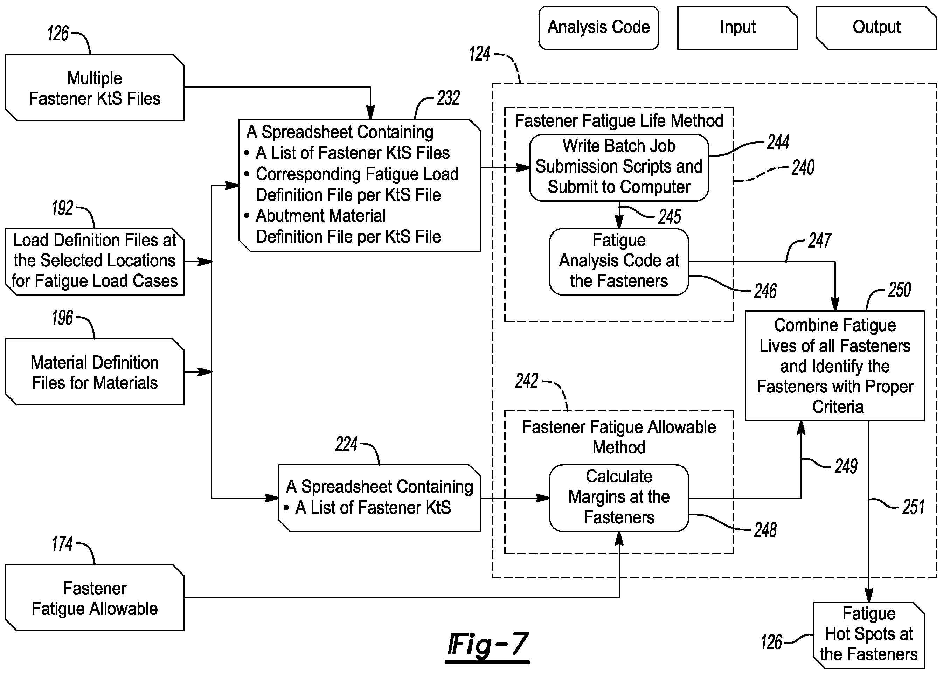

Referring to FIG. 7, a detailed flow diagram of an example implementation of the fatigue analysis for the allowables at the fasteners step 124 is shown in accordance with one or more exemplary embodiments. The step 124 generally includes steps 240 to 250, with data received from the step 126, the step 174, the step 192, the step 196, the step 224, and the step 232, and data stored in the step 126, as illustrated. The sequence of steps is shown as a representative example. Other step orders may be implemented to meet the criteria of a particular application.

The step 124 generally includes the step 240 and the step 242. The step 240 includes the step 244 and the step 246, with input data from the step 232. The step 242 include the step 248, with input data from the step 224.

The step 240 may implement a faster fatigue life method. In the step 244, a batch job submission scripts 245 may be written and submitted to one or more computers for execution. The back job is based on the spreadsheet received from the step 232. The spreadsheet is based on the multiple fastener filed received from the step 126, the load definition files received from the step 192, and the material definition files 195 received from the step 196. The bath job is executed to perform a fatigue analysis at the fasteners in the step 246. The fatigue analysis results 247 are presented to the step 250.

The step 242 may implement a fastener fatigue allowable method. In the step 248, margins 249 at the fasteners may be calculated. The margins 249 are based on the list of fasteners KtS information spreadsheet from the step 224 and the fatigue allowable data from the step 174. The list is based on the load definition files from the step 192 and the material definition files 195 from the step 196. The margins 249 are presented to the step 250.

The step 250 combines the fatigue lives of the fasteners and identifies the fasteners of interest with proper criteria. The resulting combination 251 forms the fastener hot spots 125 stored in the step 126.

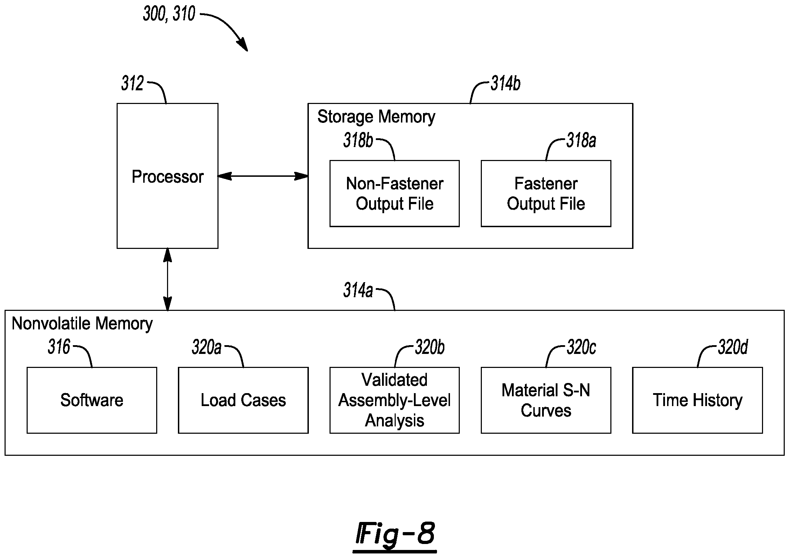

Referring to FIG. 8 with references back to FIG. 1, a schematic block diagram of an example implementation of a computer-based system 300 is shown in accordance with one or more exemplary embodiments. The system 300 is operational to perform the method 100 for virtual fatigue simulation. The system 300 is operational to generate output files in a non-transitory computer readable storage that are suitable for identifying potential fatigue hot spots in the components.

The system 300 includes a computer 310 having one or more processor 312 (one shown) and one or more storage media (or memories) 314a-314b. A first storage medium (e.g., memory 314a) may contain one or more instructions 316 (or code or software programs) readable and executable by the processor 312. The first storage medium 314a may implement libraries 320a-320d that record the load cases results per the step 102, the validated assembly-level analysis results 105 per the step 104, the material S-N curves 107 from the step 106, and the actuator time history per the step 108. Storage output files 318a-318b that store the data of the output files of the step 120 and the step 126 may be buffered and reside in a second storage medium (e.g., memory 314b). The first output file 318b is a non-fastener stress concentration output file. The second output file 318a is a fastener output file. The first storage medium 314a may be a non-transitory computer readable storage medium. The second storage medium 314b may be a non-transitory and/or transitory computer readable storage medium.

The instructions 316 may be read and executed by the computer 310 (e.g., the processor 312) to implement the process of generating the storage output files 318a-318b for the fatigue hot spot screening. The libraries 320a-320d may be accessed as appropriate during execution. In various embodiments, the instructions 316, the libraries 320a-320d and/or the storage output files 318a-318b may be stored in the same storage medium 314a or 314b.

Various embodiments of the description disclose an automated analysis technique developed to screen hot spots of potential cracks in a full-scale fatigue test. The technique is able to screen thousands of fasteners. The technique is built on a validated/verified high-fidelity simulation model, calculates fatigue spectra at multiple locations, calculates and plots fatigue life of the component/subcomponent, and exports the suspected crack locations. The suspected crack locations may subsequently be examined in a detailed durability and damage tolerance analysis.

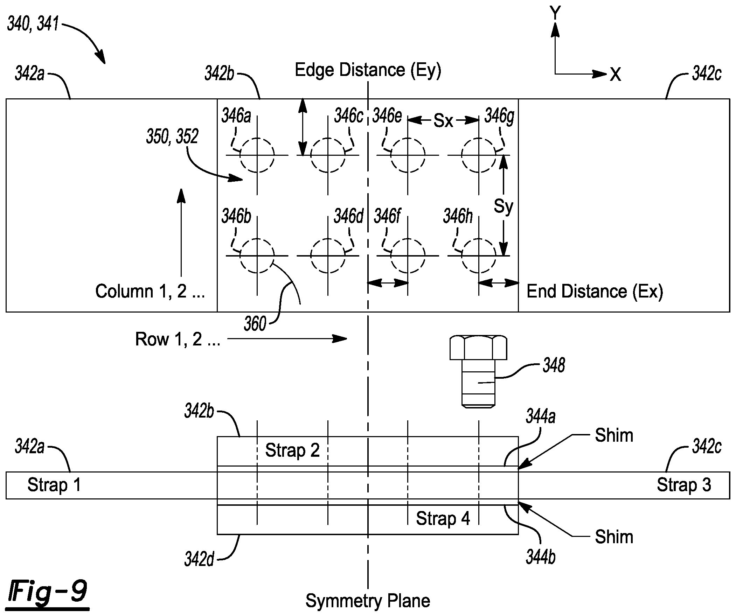

Referring to FIG. 9, a schematic plan and cross-sectional view diagram of an example component 340 with a joint 341 is shown in accordance with one or more exemplary embodiments. The joint 341 in the example includes multiple (e.g., four) straps 342a-342d, multiple (e.g., two) shims 344a-344b, and multiple (e.g., eight) fastener bores 346a-346h in corresponding fastener locations 352. Multiple fasteners (one shown) 348 are disposed in the fastener bores 346a-346h. The fastener bores 346a-346h and the respective fasteners 348 are arranged in a pattern 350 in the fastener locations 352. One or more cracks 360 (one shown) may form in the components due to fatigue.

Each strap 342a-342d is defined by a material, a thickness, a length, and a width. Likewise, each shim 344a-344b is defined by a material, a thickness, a length, and a width. The fastener bores 346a-346h are defined by a material a diameter, a length, and a width. The pattern 350 defines the number of columns (NC) (e.g., no greater than 4 in the example), a number of rows (NR) (e.g., no greater than 4 in the example), an x-spacing (Sx), and a y-spacing (Sy). Boundaries are defined by an edge distance (Ey) and an end spacing (Ex).

In various embodiments, the component 340 may be the full structure of a vehicle, such as an aircraft or spacecraft. In other embodiments, the component 340 may be a portion of the vehicle, such as a wing, airflow control surface, and the like. In still other embodiments, the component 340 may be a hand-held sized piece of the vehicle.

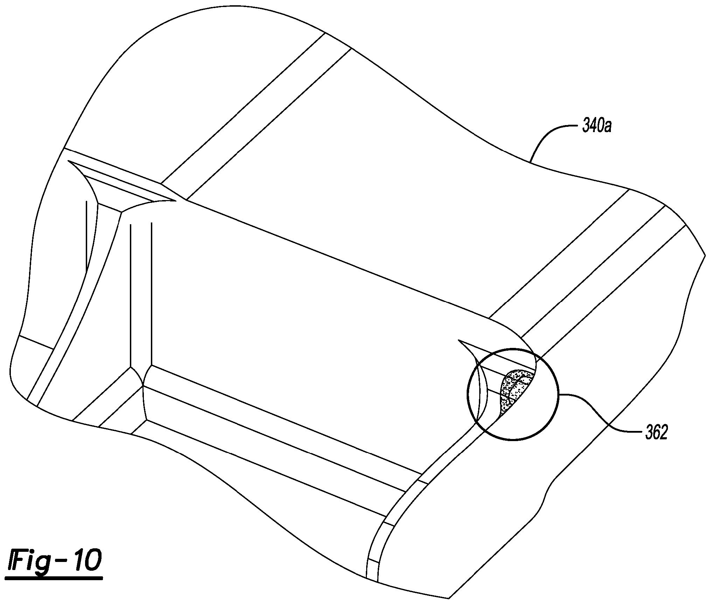

Referring to FIG. 10, a schematic perspective diagram of an example implementation of a component 340a with a non-fastener stress concentration region 362 is shown in accordance with one or more exemplary embodiments. The non-fastener stress concentration regions 362 are generally located along a surface of the component 340a. In various embodiments, the non-fastener stress concentration regions 362 may take form of a fillet with a radius of 2 inches. In other embodiments, the non-fastener stress concentration regions 362 may take form of a fillet with a radius ranging from approximately 0.25 inches to approximately 1 inch (e.g., 0.5 inches). Other non-fastener stress concentration regions may be implemented to meet the design criteria of a particular application.

Various embodiments of the disclosure provide an automated analysis technique to screen hot spots of potential cracks in a full-scale fatigue test. The technique is built on a validated/verified high-fidelity simulation model. The technique may calculate fatigue spectra at multiple locations, calculate and plot fatigue life of the component/subcomponent, and export the suspected crack locations. The suspected crack locations may subsequently be examined in a detailed durability and damage tolerance analysis.

The technique automatically identifies hot spots from static stress analysis and generate fatigue spectra. Large finite-element-models (FEMs) are handled by extracting a portion of results at a time for fatigue calculation. Static analysis results, material property, and fatigue spectra may be automatically linked with fatigue software and calculate fatigue life at a high performance computer (HPC). The technique is able to screen fatigue hot spots at shallow non-fastener stress concentration geometries and fastener bores.

Embodiments of the disclosure generally reduce a risk in a new development program by making less likely that unexpected findings arise during traditional full scale fatigue tests. The automated hot spot detection may possibly eliminate fatigue tests for some programs since the model results may be used for airframe validation instead.

As explained above and reiterated below, the present disclosure includes, without limitation, the following example implementations.

Clause 1. A method for fatigue hot spot screening comprising: identifying a plurality of static stress locations neighboring one or more fastener locations and a plurality of stress concentrations in a finite-element-model of a component in response to a plurality of analysis results and a plurality of validated assembly-level analysis results with a computer; generating a fatigue spectrum at each of the plurality of static stress locations; generating a plurality of fatigue analysis control files in response to the fatigue spectrum; reducing the plurality of validated assembly-level analysis results of the finite-element-model; generating a first output file that contains a plurality of non-fastener stress concentration hot spots in the finite-element-model by a first fatigue analysis at a plurality of non-fastener stress concentration regions in response to the plurality of fatigue analysis control files; calculating one or more local peak stresses for the one or more fastener locations; and generating a second output file that contains a plurality of fastener hot spots in the finite-element-model by a second fatigue analysis at the one or more fastener locations in response to the plurality of fatigue analysis control files.

Clause 2. The method of clause 1, further comprising extracting one or more node stresses at one or more nodes of a plurality of solid elements in the finite-element-model, wherein the generating of the fatigue spectrum is based on the one or more node stresses.

Clause 3. The method of clause 2, further comprising extracting one or more element stresses at one or more shell elements in the finite-element-model, wherein the generating of the fatigue spectrum is based on the one or more element stresses.

Clause 4. The method of clause 3, wherein the generating of the fatigue spectrum at the plurality of static stress locations includes: generating a plurality of summed stress components by summing a plurality of contributions from a plurality of commanded actuator inputs for each of a plurality of stress components extracted from the finite-element-model; calculating a plurality of principle stresses from the plurality of summed stress components; determining a maximum magnitude principle stress among the plurality of principle stresses; and generating a normalized fatigue spectrum by normalizing a time history to the maximum magnitude principle stress for a specified load case.

Clause 5. The method of clauses 1 to 4, wherein the reducing of the plurality of validated assembly-level analysis results includes splitting the plurality of validated assembly-level analysis results into a plurality of component-level results.

Clause 6. The method of clause 5, wherein the calculating of the one or more local peak stresses for the one or more fasteners includes: generating one or more fastener profiles of the one or more fasteners; extracting one or more fastener bearing stresses and one or more bypass stresses based on the plurality of validated assembly-level analysis results of a plurality of test load cases; calculating a plurality of stress correction factors for the one or more fasteners in response to the one or more fastener profiles; calculating a plurality of directional peak stresses in a plurality of directions; and pairing the one or more fasteners with corresponding fatigue spectra for fatigue analysis to determine one or more fatigue hot spots.

Clause 7. The method of clauses 1 to 4, wherein the identification of the plurality of static stress locations is in response to an analysis results of a plurality of test load cases for the finite-element-model.

Clause 8. The method of clauses 1 to 4, wherein the calculating of the one or more local peak stresses for the one or more fasteners is in response to the plurality of validated assembly-level analysis results of a plurality of test load cases applied to the finite-element-model.

Clause 9. The method of clause 8, wherein the generating of the fatigue spectrum is in response to a time history of a plurality of commanded actuator inputs applied to the component.

Clause 10. A system for fatigue hot spot screening comprising: a memory operational to buffer a plurality of analysis results and a plurality of validated assembly-level analysis results; and a computer operational to: identify a plurality of static stress locations neighboring one or more fastener locations and a plurality of stress concentrations in a finite-element-model of a component in response to the plurality of analysis results and the plurality of validated assembly-level analysis results; generate a fatigue spectrum at each of the plurality of static stress locations; generate a plurality of fatigue analysis control files in response to the fatigue spectrum; reduce the plurality of validated assembly-level analysis results of the finite-element-model; generate a first output file that contains a plurality of non-fastener stress concentration hot spots in the finite-element-model by a first fatigue analysis at a plurality of non-fastener stress concentration regions in response to the plurality of fatigue analysis control files; calculate one or more local peak stresses for the one or more fastener locations; and generate a second output file that contains a plurality of fastener hot spots in the finite-element-model by a second fatigue analysis at the one or more fastener locations in response to the plurality of fatigue analysis control files.

Clause 11. The system of clause 10, wherein: the computer is further operational to extract one or more node stresses at one or more nodes of a plurality of solid elements in the finite-element-model; and the generation of the fatigue spectrum is based on the one or more node stresses.

Clause 12. The system of clause 10 or 11, wherein: the computer is further operational to extract one or more element stresses at one or more shell elements in the finite-element-model; and the generation of the fatigue spectrum is based on the one or more element stresses.

Clause 13. The system of clause 12, wherein the generation of the fatigue spectrum at the plurality of static stress locations includes: generate a plurality of summed stress components by summing a plurality of contributions from a plurality of commanded actuator inputs for each of a plurality of stress components extracted from the finite-element-model; calculate a plurality of principle stresses from the plurality of summed stress components; determine a maximum magnitude principle stress among the plurality of principle stresses; and generate a normalized fatigue spectrum by normalizing a time history to the maximum magnitude principle stress for a specified load case.

Clause 14. The system of clauses 10 to 13, wherein the reduction of the plurality of validated assembly-level analysis results includes split the plurality of validated assembly-level analysis results into a plurality of component-level results.

Clause 15. The system of clause 14, wherein the calculation of the one or more local peak stresses for the one or more fasteners includes: generate one or more fastener profiles of the one or more fasteners; extract one or more fastener bearing stresses and one or more bypass stresses based on the plurality of validated assembly-level analysis results of a plurality of test load cases; calculate a plurality of stress correction factors for the one or more fasteners in response to the one or more fastener profiles; calculate a plurality of directional peak stresses in a plurality of directions; and pair the one or more fasteners with corresponding fatigue spectra for fatigue analysis to determine one or more fatigue hot spots.

Clause 16. The system of clauses 10 to 15, wherein the identification of the plurality of static stress locations is in response to an analysis results of a plurality of test load cases for the finite-element-model.

Clause 17. The system of clauses 10 to 16, wherein the calculation of the one or more local peak stresses for the one or more fasteners is in response to the plurality of validated assembly-level analysis results of a plurality of test load cases applied to the finite-element-model.

Clause 18. The system of clauses 10 to 17, wherein the generation of the fatigue spectrum is in response to a time history of a plurality of commanded actuator inputs applied to the component.

Clause 19. A non-transitory computer readable storage medium storing instructions that control data processing. The instructions, when executed by a processor cause the processor to perform a plurality of operations comprising: identifying a plurality of static stress locations neighboring one or more fastener locations and a plurality of stress concentrations in a finite-element-model of a component in response to a plurality of analysis results and a plurality of validated assembly-level analysis results; generating a fatigue spectrum at each of the plurality of static stress locations; generating a plurality of fatigue analysis control files in response to the fatigue spectrum; reducing the plurality of validated assembly-level analysis results of the finite-element-model; generating a first output file that contains a plurality of non-fastener stress concentration hot spots in the finite-element-model by a first fatigue analysis at a plurality of non-fastener stress concentration regions in response to the plurality of fatigue analysis control files; calculating one or more local peak stresses for the one or more fastener locations; and generating a second output file that contains a plurality of fastener hot spots in the finite-element-model by a second fatigue analysis at the one or more fastener locations in response to the plurality of fatigue analysis control files.

Clause 20. The non-transitory computer readable storage medium of clause 19 wherein: the plurality of operations further comprise extracting one or more node stresses at one or more nodes of a plurality of solid elements in the finite-element-model; and the generating of the fatigue spectrum is based on the one or more node stresses.

This disclosure is susceptible of embodiments in many different forms. Representative embodiments of the disclosure are shown in the drawings and are herein described in detail with the understanding that these embodiments are provided as an exemplification of the disclosed principles, not limitations of the broad aspects of the disclosure. To that extent, elements and limitations that are described, for example, in the Abstract, Background, Summary, and Detailed Description sections, but not explicitly set forth in the claims, should not be incorporated into the claims, singly or collectively, by implication, inference or otherwise.

For purposes of the present detailed description, unless specifically disclaimed, the singular includes the plural and vice versa. The words "and" and "or" shall be both conjunctive and disjunctive. The words "any" and "all" shall both mean "any and all", and the words "including," "containing," "comprising," "having," and the like shall each mean "including without limitation." Moreover, words of approximation such as "about," "almost," "substantially," "approximately," and "generally," may be used herein in the sense of "at, near, or nearly at," or "within 0-5% of," or "within acceptable manufacturing tolerances," or other logical combinations thereof. Referring to the drawings, wherein like reference numbers refer to like components.

The detailed description and the drawings or FIGS. are supportive and descriptive of the disclosure, but the scope of the disclosure is defined solely by the claims. While some of the best modes and other embodiments for carrying out the claimed disclosure have been described in detail, various alternative designs and embodiments exist for practicing the disclosure defined in the appended claims. Furthermore, the embodiments shown in the drawings or the characteristics of various embodiments mentioned in the present description are not necessarily to be understood as embodiments independent of each other. Rather, it is possible that each of the characteristics described in one of the examples of an embodiment may be combined with one or a plurality of other desired characteristics from other embodiments, resulting in other embodiments not described in words or by reference to the drawings. Accordingly, such other embodiments fall within the framework of the scope of the appended claims.

## Claims

1. A method (100) for fatigue hot spot screening comprising:
identifying (110) a plurality of static stress locations (111a) neighboring one or more fastener locations (352) and a plurality of stress concentrations (111b) in a finite-element-model (143) of a component (340) in response to a plurality of analysis results (103) and a plurality of validated assembly-level analysis results (105) with a computer (310);
generating (112) a fatigue spectrum (113) at each of the plurality of static stress locations (111a);
generating (114) a plurality of fatigue analysis control files (115) in response to the fatigue spectrum (113);
reducing (116) the plurality of validated assembly-level analysis results (105) of the finite-element-model (143);
generating (118) a first output file (318a) that contains a plurality of non-fastener stress concentration hot spots (119) in the finite-element-model (143) by a first fatigue analysis (118) at a plurality of non-fastener stress concentration regions (362) in response to the plurality of fatigue analysis control files (115);
calculating (122) one or more local peak stresses (123) for the one or more fastener locations (352); and
generating (124) a second output file (318b) that contains a plurality of fastener hot spots (125) in the finite-element-model (143) by a second fatigue analysis (124) at the one or more fastener locations (352) in response to the plurality of fatigue analysis control files (115).

2. The method (100) according to claim 1, further comprising either:
extracting (146) one or more node stresses (149a) at one or more nodes (131a) of a plurality of solid elements (145) in the finite-element-model (143), wherein the generating (112) of the fatigue spectrum (133) is based on the one or more node stresses (149a); or
extracting (148) one or more element stresses (149b) at one or more shell elements (131b) in the finite-element-model (143), wherein the generating (112) of the fatigue spectrum (113) is based on the one or more element stresses (149b).

3. The method (100) according to any one of the preceding claims, wherein the generating (112) of the fatigue spectrum (113) at the plurality of static stress locations (1 11a) includes:
generating (162) a plurality of summed stress components (163) by summing a plurality of contributions from a plurality of commanded actuator inputs (109) for each of a plurality of stress components (161) extracted from the finite-element-model (143);
calculating (164) a plurality of principle stresses (165) from the plurality of summed stress components (163);
determining (166) a maximum magnitude principle stress (167) among the plurality of principle stresses (165); and
generating (168) a normalized fatigue spectrum (169) by normalizing a time history (108) to the maximum magnitude principle stress (167) for a specified load case (175).

4. The method (100) according to any one of the preceding claims, wherein the reducing (116) of the plurality of validated assembly-level analysis results 105 includes:
splitting (200) the plurality of validated assembly-level analysis results (105) into a plurality of component-level results (201).

5. The method (100) according to any one of the preceding claims, wherein the calculating (122) of the one or more local peak stresses (123) for the one or more fasteners (348) includes:
generating (214) one or more fastener profiles (215) of the one or more fasteners (348);
extracting (216) one or more fastener bearing stresses (217a) and one or more bypass stresses (217b) based on the plurality of validated assembly-level analysis results (105) of a plurality of test load cases (104);
calculating (218) a plurality of stress correction factors (219) for the one or more fasteners (348) in response to the one or more fastener profiles (215);
calculating (226) a plurality of directional peak stresses (227) in a plurality of directions; and
pairing (228) the one or more fasteners (348) with corresponding fatigue spectra (171) for fatigue analysis (118, 124) to determine one or more fatigue hot spots (119, 125).

6. The method (100) according to any one of the preceding claims, wherein:
the identification (110) of the plurality of static stress locations (111a) is in response to an analysis results (103) of a plurality of test load cases (104) for the finite-element-model (143).

7. The method (100) according to any one of the preceding claims, wherein:
the calculating (122) of the one or more local peak stresses (123) for the one or more fasteners (348) is in response to the plurality of validated assembly-level analysis results (105) of a plurality of test load cases (104) applied to the finite-element-model (143).

8. The method (100) according to any one of the preceding claims, wherein:
the generating (112) of the fatigue spectrum (113) is in response to a time history of a plurality of commanded actuator inputs (109) applied to the component (340).

9. A system (300) for fatigue hot spot screening comprising:
a memory (314a) operational to buffer a plurality of analysis results (103) and a plurality of validated assembly-level analysis results (105); and
a computer (310) operational to:
identify (110) a plurality of static stress locations (1 11a) neighboring one or more fastener locations (352) and a plurality of stress concentrations (111b) in a finite-element-model (143) of a component (340) in response to the plurality of analysis results (103) and the plurality of validated assembly-level analysis results (105);
generate (112) a fatigue spectrum (113) at each of the plurality of static stress locations (111a);
generate (114) a plurality of fatigue analysis control files (115) in response to the fatigue spectrum (113);
reduce (116) the plurality of validated assembly-level analysis results (105) of the finite-element-model (143);
generate (118) a first output file (318a) that contains a plurality of non-fastener stress concentration hot spots (119) in the finite-element-model (143) by a first fatigue analysis at a plurality of non-fastener stress concentration regions (362) in response to the plurality of fatigue analysis control files (115);
calculate (122) one or more local peak stresses (123) for the one or more fastener locations (352); and
generate (124) a second output file (318b) that contains a plurality of fastener hot spots (125) in the finite-element-model (143) by a second fatigue analysis (124) at the one or more fastener locations (352) in response to the plurality of fatigue analysis control files (115).

10. The system (300) according to claim 9, wherein: the computer (310) is further operational to either;
extract (146) one or more node stresses (149a) at one or more nodes (131a) of a plurality of solid elements (145) in the finite-element-model (143), whereby the generation (112) of the fatigue spectrum (113) is based on the one or more node stresses (149a); or
extract one or more element stresses (149b) at one or more shell elements (131b) in the finite-element-model (143), whereby the generation 112 of the fatigue spectrum 113 is based on the one or more element stresses 149b.

11. The system (300) according to any one of claims 9-10, wherein the generation (112) of the fatigue spectrum (113) at the plurality of static stress locations (111a) includes:
generate (162) a plurality of summed stress components (163) by summing a plurality of contributions from a plurality of commanded actuator inputs (109) for each of a plurality of stress components (161) extracted from the finite-element-model (143);
calculate (164) a plurality of principle stresses (165) from the plurality of summed stress components (163);
determine (166) a maximum magnitude principle stress (167) among the plurality of principle stresses (165); and
generate (168) a normalized fatigue spectrum (169) by normalizing a time history (108) to the maximum magnitude principle stress (167) for a specified load case (175).

12. The system (300) according to any one of claims 9-11, wherein the reduction (116) of the plurality of validated assembly-level analysis results (105) includes:
split (200) the plurality of validated assembly-level analysis results (105) into a plurality of component-level results (201).

13. The system (300) according to any one of claims 9-12, wherein the calculation (122) of the one or more local peak stresses (123) for the one or more fasteners (348) includes:
generate (214) one or more fastener profiles (215) of the one or more fasteners (348);
extract (216) one or more fastener bearing stresses (217a) and one or more bypass stresses (217b) based on the plurality of validated assembly-level analysis results (105) of a plurality of test load cases (104);
calculate (218) a plurality of stress correction factors (219) for the one or more fasteners (348) in response to the one or more fastener profiles (215);
calculate (226) a plurality of directional peak stresses (227) in a plurality of directions; and
pair (228) the one or more fasteners (348) with corresponding fatigue spectra (171) for fatigue analysis (118, 124) to determine one or more fatigue hot spots (119, 125).

14. The system (300) according to any one of claims 9-13, wherein:
the identification (110) of the plurality of static stress locations (111a)is in response to an analysis results (103) of a plurality of test load cases (104) for the finite-element-model (143).

15. A non-transitory computer readable storage medium (314a) storing instructions (316) that control data processing, the instructions (316), when executed by a processor cause the processor to perform a plurality of operations comprising:
identifying (110) a plurality of static stress locations (111a) neighboring one or more fastener locations (352) and a plurality of stress concentrations in a finite-element-model (143) of a component (340) in response to a plurality of analysis results (103) and a plurality of validated assembly-level analysis results 105;
generating (112) a fatigue spectrum (113) at each of the plurality of static stress locations (111a);
generating (114) a plurality of fatigue analysis control files (115) in response to the fatigue spectrum (113);
reducing (116) the plurality of validated assembly-level analysis results (105) of the finite-element-model (143);
generating (118) a first output file (318a) that contains a plurality of non-fastener stress concentration hot spots (119) in the finite-element-model (143) by a first fatigue analysis at a plurality of non-fastener stress concentration regions (362) in response to the plurality of fatigue analysis control files (115);
calculating (122) one or more local peak stresses (123) for the one or more fastener locations (352); and
generating (124) a second output file (318b) that contains a plurality of fastener hot spots (125) in the finite-element-model (143) by a second fatigue analysis at the one or more fastener locations (352) in response to the plurality of fatigue analysis control files (115); and wherein, preferably, the plurality of operations further comprise extracting (146) one or more node stresses (149a) at one or more nodes (131a) of a plurality of solid elements (145) in the finite-element-model (143), the generating (112) of the fatigue spectrum (113) being based on the one or more node stresses (149a).
